(19) Europäisches Patentamt
European Patent Office
Office européen des brevets

(11) EP 0 948 197 A2

(12) EUROPÄISCHE PATENTANMELDUNG

(43) Veröffentlichungstag:
06.10.1999 Patentblatt 1999/40

(51) Int. Cl.⁶: **H04N 5/232**

(21) Anmeldenummer: 99104662.4

(22) Anmeldetag: 09.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 03.04.1998 DE 19814951

(71) Anmelder: Zeiss Optronik GmbH
73447 Oberkochen (DE)

(72) Erfinder:
• Claus, Michael, Dr.
  73434 Aachen (DE)
• Esswein, Karl-Heinz
  73446 Oberkochen (DE)

(74) Vertreter: Gnatzig, Klaus
Carl Zeiss
Patentabteilung
73446 Oberkochen (DE)

(54) **Vorrichtung und Verfahren zur digitalen Bildstabilisierung**

(57) Die Erfindung bezieht sich auf eine hochgenaue digitale Stabilisierung der Bildaufnahme mit einem in einem sich bewegenden oder fliegenden Träger eingesetzten CCD-Sensor. Zur digitalen Bildstabilisierung werden die (Flug)Bewegungen des Trägers mit Hilfe eines inertialen Drehratensensors erfaßt und gespeichert. Dann wird eine Korrektur der Bilddaten anhand der erfaßten (Flug)Bewegungen durchgeführt.

Fig. 1

EP 0 948 197 A2

**Beschreibung**

Die vorliegende Erfindung bezieht sich auf eine Vorrichtung und ein Verfahren zur digitalen Stabilisierung der Bildaufnahme mit einem in einem sich bewegenden oder fliegenden Träger eingesetzten CCD-Sensor gemäß dem Gattungsbegriff des Anspruchs 1.

Bisher bekannte Stabilisierungen arbeiten nach dem elektro-mechanischen Prinzip mit einer kardanischen Aufhängung des Sensors mit Ansteuerung der Stellmotoren durch einen Inertialsensor, oder es werden CCD-Sensoren bei Luftbildaufnahmen ohne Stabilisierung eingesetzt, wobei dann bei einem Zeilensensor zwischen den einzelnen Zeilen oder bei einem Flächensensor zwischen den Frames eine Bildwanderung in Kauf genommen werden muß, die durch Störbewegungen des Trägers verursacht wird.

Generell ist es möglich, eine Bildstabilisierung an Bord oder in einer Bodenstation durchzuführen. Im ersten Fall spricht man von einer „On-line-Stabilisierung" zur Darstellung auf einem Monitor, im zweiten Fall von einer „Off-line-Bildauswertung". In der Regel wird bisher eine „On-line-Stabilisierung durchgeführt. Insbesondere erfolgt diese bei Flächensensoren in Camcordern, wobei eine On-line-Korrektur durchgeführt wird und eine analoge Signalverarbeitung erfolgt.

Beispielsweise ist es aus der EP 0 543 394 A2 bekannt, daß für einen Flächensensor die zum Zeitpunkt der Belichtung auftretenden Bewegungen on-line in einem Frequenzbereich von 1-12Hz kompensiert werden. Die Korrektur erfolgt dabei durch ein optisches Element. Die Korrektursignale werden über zwei Sensoren, die jeweils die Winkelbeschleunigung oder die -geschwindigkeit messen, ermittelt.

Weiterhin offenbart die EP 0 574 228 A1 die Ermittlung von Vibrationen in horizontaler und vertikaler Richtung, wobei eine On-line-Korrektur entweder durch Umadressierung oder das Auslesen aus Speicherregistern mit geringerer Frequenz als beim Schreiben vorgenommen wird.

Schließlich ist aus der US 4 959 725 eine sehr aufwendige Schaltung zur Korrektur des Videosignals eines Flächensensors unter Auswertung von Beschleunigungsmessern bekannt.

Jedoch sind alle bekannten Lösungen des Standes der Technik von ihrer Wirtschaftlichkeit her nicht annähernd als optimal zu bezeichnen, da sie mit hohen Kosten verbunden sind.

Der vorliegenden Erfindung liegt daher die Aufgabe zugrunde, eine Vorrichtung und ein Verfahren zur digitalen Bildstabilisierung zu schaffen, mit der bzw. dem die Bewegungseinflüsse eines sich bewegenden oder fliegenden Trägers auf die Bildqualität eines sich mitbewegenden oder mitfliegenden Sensors zu geringen Kosten kompensierbar sind, d.h. eine Korrektur von Roll- und Nickeinflüssen von Luftbildkameras mit Zeilensensoren und Flächensensoren mit mindestens Pixelgenauigkeit ermöglicht wird, die digital mit großen Datenmengen >6000 Pixeln pro Zeile und deshalb off-line erfolgt, und dabei wirtschaftlich ist.

Diese Aufgabe wird durch die im Anspruch 1 bzw. 6 angeführten Maßnahmen gelöst. In den Unteransprüchen sind Ausgestaltungen und Weiterbildungen angegeben und in der nachfolgenden Beschreibung in Verbindung mit der Zeichnung werden bevorzugte Ausführungsbeispiele erläutert.

Es zeigen:

Fig. 1 ein Blockschaltbild einer erfindungsgemäßen On-Line-Stabilisierung der Bildaufnahme und

Fig. 2 ein Blockschaltbild einer erfindungsgemäßen Off-Line-Stabilisierung der Bildaufnahme.

Bei dem Verfahren bzw. der Vorrichtung zur digitalen Bildstabilisierung gemäß der Erfindung kann eine Bildstabilisierung entweder an Bord, d.h. eine On-Line-Stabilisierung zur Darstellung auf einem Monitor, oder in einer Fest- bzw. Bodenstation, d,h, eine Off-Line-Bildauswertung, erfolgen.

Figen. 1 und 2 zeigen ein Blockschaltbild einer erfindungsgemäßen On-Line-Stabilisierung bzw. einer erfindungsgemäßen Off-Line-Stabilisierung. Dabei werden die (Flug)Bewegungen des Trägers mit Hilfe eines inertialen Drehratensensors 2 als Winkelinformationen 11 erfaßt und zusammen mit den Bilddaten 10 auf einem Datenträger 3 bzw. 6 zwischengespeichert oder aufgezeichnet.

Bei einer Bilddatenkorrektur werden zu einer Stabilisierung um die Rollachse Bildzeilen pixelweise um entsprechend Winkelinkremente quer zur Flugrichtung verschoben, während eine Stabilisierung um die Nickachse durch ein Weglassen oder Vervielfältigen ganzer Zeilen erfolgt. Bei einer Stabilisierungsgenauigkeit im Subpixelbereich wird die Bildinformation benachbarter Pixel in und quer zur Flugrichtung interpoliert.

Der inertiale Drehratensensor 2, der die Flugbewegungen erfaßt, kann ein sogenannter „Strap Down Sensor" sein. Bei diesem Sensor ist das Stabilisierungsergebnis im wesentlichen von der Skalierungsgenauigkeit und Bandbreite des Sensors abhängig. Insbesondere besitzt der Drehratensensor 2 eine endliche Bandbreite, typischerweise 100Hz und liefert daher die erfaßten Winkelinformationen 11 zeitverzögert. Aus diesem Grund kann sein Übertragungsverhalten für niedere Frequenzen durch ein Totzeitglied (linerare Phase, d.h. Phasennacheilung proportional zur Frequenz) angenähert werden.

Als Drehratensensor 2 ist beispielsweise ein dynamisch abgestimmter Kreisel (DAK) sehr gut geeignet. Mit solchen Geräten sind Skalierungsfehler bis 0,1% und Bandbreiten bis 100Hz erreichbar.

Bei einer beispielshaften Ausführung eines als Drehratensensor 2 verwendeten dynamisch abgestimmten Kreisels (DAK) betrug die Pixelgröße des Sensors (dx) 12 μm, die Brennweite eines Objektivs (f) 60mm, die Winkelausdehnung des Sensors (DAS=dx/f) 0,2mrad und die Zeilenfrequenz (linerate) minimal 200Hz und maximal 2500 Hz. Sinusförmige Störanregungen im Bereich von 10°/0,2Hz bis 0,2°/10Hz haben eine Drehrate von 12,5°/sec = 220mrad/sec.

Für eine Belichtungszeit von 0,4ms ergibt sich dabei eine Bildverschmierung von 0,09 mrad, was 0,5 Pixeln entspricht, während sich bei einer Belichtungszeit von 5ms eine Bildverschmierung von 1,1mrad ergibt, was 5,5 Pixeln entspricht. Demnach ergibt sich, daß bei niederen Zeilenfrequenzen eine Bildverschmierung über mehrere Pixel in Kauf genommen werden muß, die durch die nachfolgende Stabilisierung nicht mehr korrigiert werden kann.

Ein Gesamtfehler, d.h. die quadratische Summe aus dem Restfehler der digitalen Stabilisierung und der Bildverschmierung, beträgt abhängig von der Zeilenfrequenz bzw. Linerate (LR) für LR=2500Hz 0,22mrad und für LR=200Hz 1,12mrad. Damit ergibt sich für den Stabilisierungsfaktor folgendes:

| Störanregung: | Stabilisierungsfaktor für LR=2500Hz (200Hz) |
|---|---|
| 10°/0,2Hz | 792(155) |
| 0,2°/10Hz | 16(3) |

Die Rechnersimulation eines dynamisch abgestimmten Kreisels (DAK's) mit 100Hz Bandbreite und 0.1% Skalierungsfehler hat weiterhin ergeben, daß für sinusförmige Störanregungen im Bereich 10°/0.2Hz bis 0.2°/10Hz der Stabilisierungsfehler des korrigierten Bildes $\leq$ 0.2 mrad (Null-Spitze) ist.

Eine digitale Bildstabilisierung ist also dann sinnvoll, wenn die Frequenzen der Störanregung so gering sind, daß keine starke „Verschmierung" während der Belichtungszeit auftritt. Der Nutzen der Stabilisierung kann durch den Stabilisierungsfaktor beurteilt werden, der das Amplitudenverhältnis von Störanregung und Rest-Bildbewegung ist.

Insbesondere können auch nichtstabilisierte Sensoren durch entsprechende Module wirtschaftlich mit einer Vorrichtung zur digitalen Bildstabilisierung erweitert und damit aufgewertet werden.

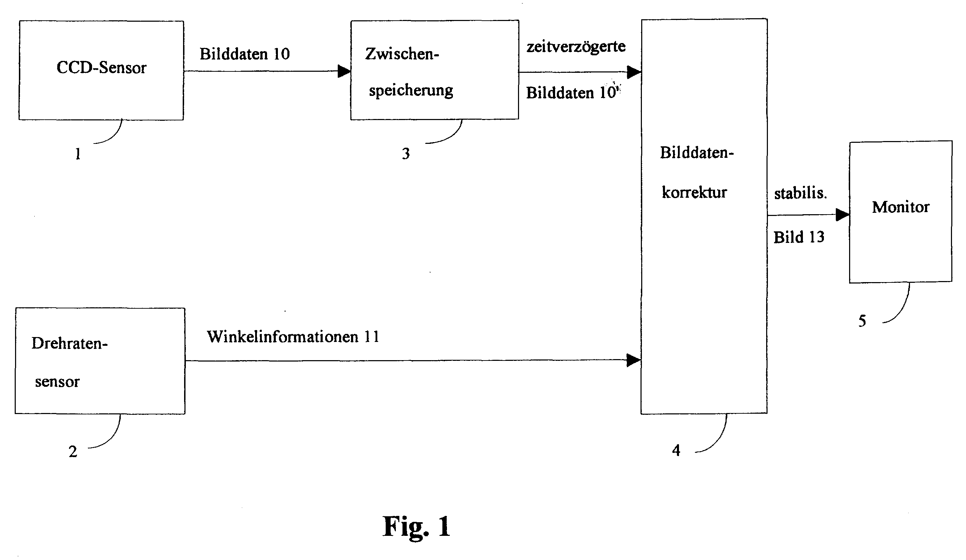

Eine erfindungsgemäße digitale Bildstabilisierung kann nun entweder an Bord als On-Line-Stabilisierung (Fig. 1) zur Darstellung auf einem Monitor 5 erfolgen, wobei an Bord ein Drehratensensor 2 ausgebildet ist und eine Einrichtung zur Bilddatenzwischenspeicherung 3 sowie eine Einrichtung zur Bilddatenkorrektur 4, oder als Off-Line-Stabilisierung in einer Fest- bzw. Bodenstation, wobei an Bord ein Drehratensensor 2 und eine zusätzliche Aufzeichnungseinrichtung 6 für Drehratensensorsignale (Winkelinformationen) ausgebildet sind und in der Fest- bzw. Bodenstation eine Einrichtung 4' zur Durchführung einer Bildkorrektur gemäß registrierter bzw. aufgezeichneter Drehratensensorsignale (Winkelformationen) ausgebildet ist.

Insbesondere macht sich erfindungsgemäß die Vorrichtung bzw. das Verfahren zur digitalen Bildstabilisierung zunutze, daß die Bildinformation zwischengespeichert oder zeitverzögert werden kann. Dabei werden zur Bildkorrektur die Bilddaten zu den aufgezeichneten Winkelinformationen um ein Zeitintervall verzögert, das die Zeitverzögerung durch den Drehratensensor sowie durch Abtastung und Rechenzeit berücksichtigt.

Bei der On-Line-Stabilisierung (an Bord des Trägers), wie in Fig. 1 gezeigt, erfolgt eine Erfassung von Bilddaten 10 durch einen CCD-Sensor, der in einem sich bewegenden bzw. fliegenden Träger eingesetzt ist. Diese Bilddaten 10 werden in einer Einrichtung 3 zwischengespeichert und als zeitverzögerte Bilddaten 10' an eine Einrichtung zur Bilddatenkorrektur 4 ausgegeben. Zusätzlich erhält die Einrichtung zur Bilddatenkorrektur 4 von einem Drehratensensor 2 Winkelinformationen, die die (Flug)Bewegungen des Trägers darstellen. Die Einrichtung zur Bilddatenkorrektur 4 erzeugt aus den verzögerten Bilddaten 10' und den Winkelinformationen 11 ein stabilisiertes Bild 13, das auf einem Monitor 5 angezeigt wird, der sich ebenfalls an Bord des Trägers befindet.

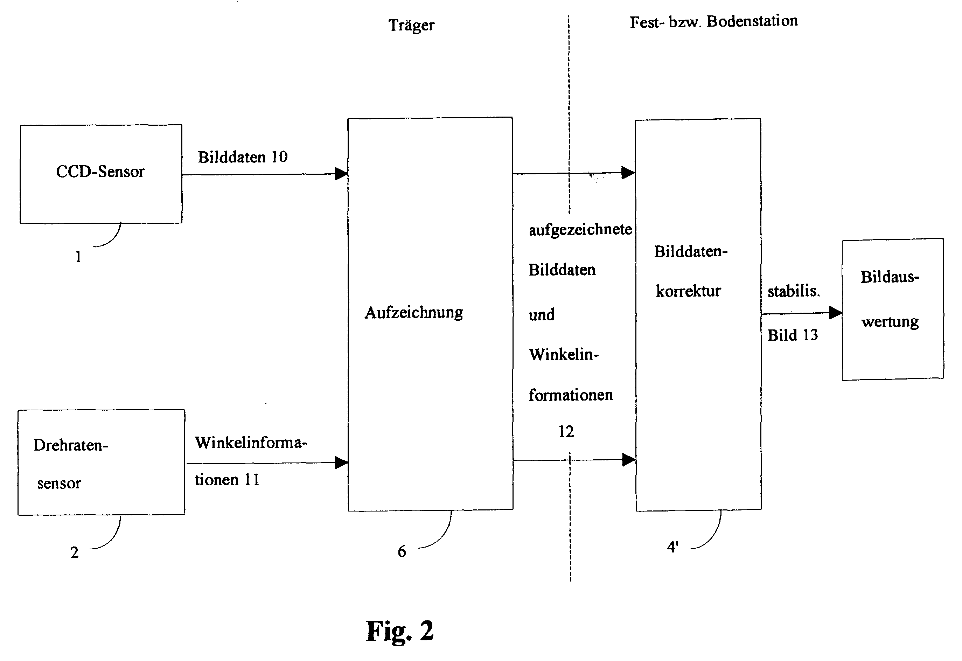

Bei der Off-Line-Stabilisierung, wie in Fig. 2 gezeigt, erfolgt eine Erfassung von Bilddaten 10 durch einen an Bord eines sich bewegenden oder fliegenden Trägers eingesetzten CCD-Sensor 2. Außerdem ist an Bord des Trägers ein Drehratensensor 2 ausgebildet, der die (Flug)Bewegungen des Trägers erfaßt und entsprechende Winkelinformationen 11 ausgibt. Diese Winkelinformationen 11 werden zusammen mit den Bilddaten 10 in einer Aufzeichnungseinrichtung 6 aufgezeichnet. Zur Auswertung und Bilddatenkorrektur Off-Line werden die aufgezeichneten Bildaten und Winkelinformationen 12 in eine Einrichtung zur Bilddatenkorrektur 4' in einer Fest- bzw. Bodenstation ausgegeben. Diese Einrichtung zur Bilddatenkorrektur 4' verzögert die Bilddaten zu den aufgezeichneten Winkelinformationen um ein Zeitintervall, das die Zeitverzögerung durch den Drehratensensor sowie durch Abtastung und Rechenzeit berücksichtigt.

Somit wird durch die vorstehend erläuterten Maßnahmen die Problematik von unerwünschten Bewegungseinflüssen eines sich bewegenden oder fliegenden Trägers auf die Bildqualität eines sich mitbewegenden oder mitfliegenden Sensors durch eine digitale Stabilisierung in sehr wirtschaftlicher Weise gelöst.

Durch eine Integration der erfindungsgemäßen Vorrichtung bzw. des Verfahrens in elektro-optische Sensorsysteme kann eine Leistungssteigerung erreicht werden.

**Patentansprüche**

1. Verfahren zum digitalen Stabilisieren der Bildaufnahme mit einem in einem sich bewegenden oder fliegenden Träger eingesetzten CCD-Sensor (1) zum weitgehenden Beseitigen von unerwünschten Bewegungseinflüssen von (Flug)Bewegungen des Trägers auf die Bildqualität des sich mitbewegenden oder mitfliegenden Sensors (1), mit den Schritten:

   a) Erfassen eines Bilds durch einen CCD-Sensor (1) und Ausgeben von Bilddaten (10),
   b) Erfassen der (Flug)Bewegungen des Trägers mit Hilfe eines inertialen Drehratensensors (2) als Winkelinformationen (11), wobei der Drehratensensor (2) die Winkelinformationen (11) zeitverzögert liefert, und
   c) Korrigieren der Bilddaten (10; 10') gemäß erfaßter Winkelinformationen (11), wobei die Bilddaten (10') zu den erfaßten Winkelinformationen (11) um ein Zeitintervall verzögert werden.

2. Verfahren nach Anspruch 1, mit dem weiteren Schritt

   Zwischenspeichern der Bilddaten (10) vom CCD-Sensor (2) auf einem Datenträger (3), um die Bilddaten (10) um ein Zeitintervall zu verzögern.

3. Verfahren nach Anspruch 1 oder 2, wobei

   das Korrigieren als On-Line-Stabilisierung erfolgt,
   mit dem weiteren Schritt:
   d) Anzeigen der korrigierten Bilddaten als stabilisiertes Bild (13) auf einem Monitor (5) an Bord des Trägers.

4. Verfahren nach Anspruch 1, mit dem Schritt:

   Aufzeichnen der erfaßten Winkelinformationen (11) zusammen mit den Bilddaten (10) vom CCD-Sensor (1) auf einem Datenträger (6), wobei das Korrigieren als Off-line-Bildauswertung in einer Fest- bzw. Bodenstation erfolgt.

5. Verfahren nach einem der Ansprüche 1 bis 4, wobei

   das Zeitintervall zur Verzögerung die Zeitverzögerung durch den Drehratensensor (2) sowie durch Abtastung und Rechenzeit berücksichtigt.

6. Verfahren nach einem der Ansprüche 1 bis 5, wobei

als Drehratensensor (2) ein „Strap Down Sensor" eingesetzt wird.

7. Verfahren nach einem der Ansprüche 1 bis 6, wobei

   beim Korrigieren der Bilddaten (10; 10') zum Stabilisieren um die Rollachse die Bildzeilen pixelweise um die entsprechenden Winkelinkremente quer zu Flugrichtung verschoben werden, während das Stabilisieren um die Nickachse durch das Weglassen oder Vervielfältigen ganzer Zeilen erfolgt.

8. Vorrichtung zur digitalen Stabilisierung der Bildaufnahme mit einem in einem sich bewegenden oder fliegenden Träger eingesetzten CCD-Sensor (1) zum weitgehenden Beseitigen von unerwünschten Bewegungseinflüssen von (Flug)Bewegungen des Trägers auf die Bildqualität des sich mitbewegenden oder mitfliegenden Sensors (1), mit:

   einem CCD-Sensor (1) zur Bilderfassung und zur Ausgabe von Bilddaten (10),
   einem inertialen Drehratensensor (2) zur Erfassung von (Flug)Bewegungen des Trägers als Winkelinformationen (11), und
   einer Einrichtung zur Bilddatenkorrektur (4; 4') gemäß erfaßter Winkelinformationen (11), wobei die Bilddaten (10; 10') zu den erfaßten Winkelinformationen (11) um ein Zeitintervall verzögert sind.

9. Vorrichtung nach Anspruch 1, mit

   einer Einrichtung zur Bildatenzwischenspeicherung (3), die die Bilddaten (10) um ein Zeitintervall verzögert.

10. Vorrichtung nach Anspruch 8 oder 9, wobei

   die Einrichtung zur Bilddatenkorrektur (4) an Bord des Trägers ausgebildet ist und eine On-Line-Stabilisierung durchführt und
   ein Monitor (5) an Bord des Trägers zur Anzeige der korrigierten Bilddaten als stabilisiertes Bild (13) ausgebildet ist.

11. Vorrichtung nach Anspruch 1, mit

   einer Einrichtung zur Aufzeichnung (6) der Winkelinformationen (11) vom Drehratensensor (2) zusammen mit den Bilddaten (10) an Bord des Trägers, wobei
   die Einrichtung zur Bilddatenkorrektur (4') in einer Fest- bzw. Bodenstation ausgebildet ist und eine Off-Line-Bildauswertung durchführt.

12. Vorrichtung nach einem der Ansprüche 8 bis 11, wobei

das Zeitintervall zur Verzögerung die Zeitverzögerung durch den Drehratensensor sowie durch Abtastung und Rechenzeit berücksichtigt.

13. Vorrichtung nach einem der Ansprüche 8 bis 12, wobei

der Drehratensensor (2) ein „Strap Down Sensor" ist.

14. Vorrichtung nach einem der Ansprüche 8 bis 13, wobei

die Einrichtung zur Bilddatenkorrektur (4; 4') zur digitalen Stabilisierung um die Rollachse die Bildzeilen pixelweise um die entsprechenden Winkelinkremente quer zu Flugrichtung verschiebt, während sie zur Stabilisierung um die Nickachse ganze Zeilen wegläßt oder vervielfältigt.

CCD-Sensor 1

Bilddaten 10

Zwischen-speicherung 3

zeitverzögerte Bilddaten 10'

Bilddaten-korrektur 4

stabilis. Bild 13

Monitor 5

Drehraten-sensor 2

Winkelinformationen 11

**Fig. 1**

Träger

Fest- bzw. Bodenstation

| CCD-Sensor |
|---|

Bilddaten 10

1

| Aufzeichnung |
|---|

aufgezeichnete

Bilddaten

und

Winkelinformationen

12

| Bilddaten-korrektur |
|---|

stabilis.

Bild 13

| Bildaus-wertung |
|---|

| Drehraten-sensor |
|---|

Winkelinforma-tionen 11

2

6

4'

EP 0 948 197 A2

**Fig. 2**